# EUROPEAN PATENT SPECIFICATION

(11) **EP 1 066 726 B1**
(45) Date of publication and mention of the grant of the patent: **02.03.2005**
(21) Application number: 96937220.0
(22) Date of filing: 24.10.1996
(51) Int. Cl.: H04Q 3/00

(54) **A COMMUNICATIONS ADDRESSING NETWORK AND TERMINAL THEREFOR**
KOMMUNIKATIONSADRESSIERUNGSNETZWERK UND ENDGERÄT DAFÜR
RESEAU D'ADRESSAGE DE COMMUNICATIONS ET TERMINAL ASSOCIE

(30) Priority: 04.11.1995 GB 9522667
(43) Date of publication of application: 10.01.2001
(73) Proprietor: MOTOROLA LTD, Basingstoke, Hampshire RG22 4PD (GB)
(72) Inventor: ROBINSON, William, Neil, F-78860 Saint-Nom-la-Breteche (FR); WHINNETT, Nicholas William, 75004 Paris (FR); GIBBS, Jonathan, Alistair, Southampton, Hampshire SO30 2UL (GB); VAN DEN HEUVEL, Anthony, 78120 Clairefontaine (FR)
(74) Representative: Cross, Rupert Edward Blount
(86) International application number: PCT/EP1996/004622
(87) International publication number: WO 1997/017814

(56) References cited:
- EP-A- 0 581 526
- EP-A- 0 618 708
- EP-A- 0 649 265
- THIRD INTERNATIONAL CONFERENCE ON INTELLIGENCE IN BROADBAND SERVICE AND NETWORKS, 16 - 19 October 1995, HERAKLION CRETE, pages 213-224, XP000593477 KLEIER ET AL: "PERSONAL COMMUNICATION SYSTEM REALIZATIONS: PERFORMANCE AND QUALITY OF SERVICE ASPECTS ON SS-No.7"
- IEEE NETWORK: THE MAGAZINE OF COMPUTER COMMUNICATIONS, vol. 8, no. 2, March 1994, NEW YORK US, pages 6-16, XP000515075 LAUER: "IN ARCHITECTURES FOR IMPLEMENTING UNIVERSAL PERSONAL TELECOMMUNICATIONS"

## Description

### Field of the Invention

Generally, the present invention concerns communications and more particularly, a unique communications network for providing addressing and communications of multiple services to multiple users.

### Background of the Invention

Today, there are a large number of communication addressing schemes available. Each addressing scheme requires a new identity for a particular individual, thus, creating an exhaustive list of identities to reach a particular individual. An example of such identities include home telephone number, home fax number, cellular phone number, pager number, work telephone number, work fax number, and internet address.

This list of communication identities creates incredible complexity for a user. First, in order to communicate with an end user the calling user must store and recover the appropriate communication identity for the desired communication service for that particular user. Second, the calling user must be familiar with the different methods of entering the different telecommunication identities such as E-mail and voice communications. Third, the user may need to change his communication identities as the individual networks grow or identities are reallocated. Thus, it would be desirable for a calling user to be able to communicate to an end user merely by identifying the end user and the service which the calling user wishes to use for his communication. Such a system, if provided, would allow the calling user to operate more efficiently with less frustration by allowing the calling user to forget all of the individual communication identities as well as minimize the methods by which to enter the different communication modes.

EP 0 649 265 discloses a communication system providing a call routing service in which each subscriber registered with the system is allocated a unique published subscriber identification number (SID). The system has one or more local databases, containing a memory location permanently associated with a respective subscriber, and containing current call routing information for the subscriber, and a central database containing a fixed record for the subscriber including the location of the local database containing the subscriber routing information.

Third International Conference on Intelligence in Broadband Service and Networks, 16. - 19.10.1995, Heraklion Crete pages 213-224, XP000593477, S. KJeier et al.: "Personal communication System Realizations: Performance and Quality of Service aspects on SS-No.7" discusses a telecommunication service providing personal mobility, in which users can initiate and receive calls on the basis of a personal network transparent number across multiple networks, at any terminal.

According to one aspect of the invention there is provided a communication terminal as claimed in claim 1.

According to a second aspect of the invention, there is provided a method of routing a communication as claimed in claim 6.

### Brief Description of the Drawings

FIG. 1 is an illustration in block diagram form of a communications addressing network in accordance with the present invention.
FIG. 2 is an illustration in block diagram form of a communication terminal in accordance with the present invention.
FIG. 3 is an illustration of a network node in accordance with the present invention.
FIG. 4 is an illustration of an example communication scenario in accordance with the present invention.
FIG. 5 is an illustration of an example communication scenario in accordance with the present invention.

### Detailed Description of a Preferred Embodiment

A preferred embodiment of the present invention is an implementation of a communications addressing network including a communication terminal and at least a first network node for communicating between a first communication terminal and a second communication terminal. This communications addressing network allows a calling user to create a communication request for communicating to the second communication terminal. The communication request includes commonly known information such as an end users name, an organization that the end user is associated with and a type of service used to communicate.

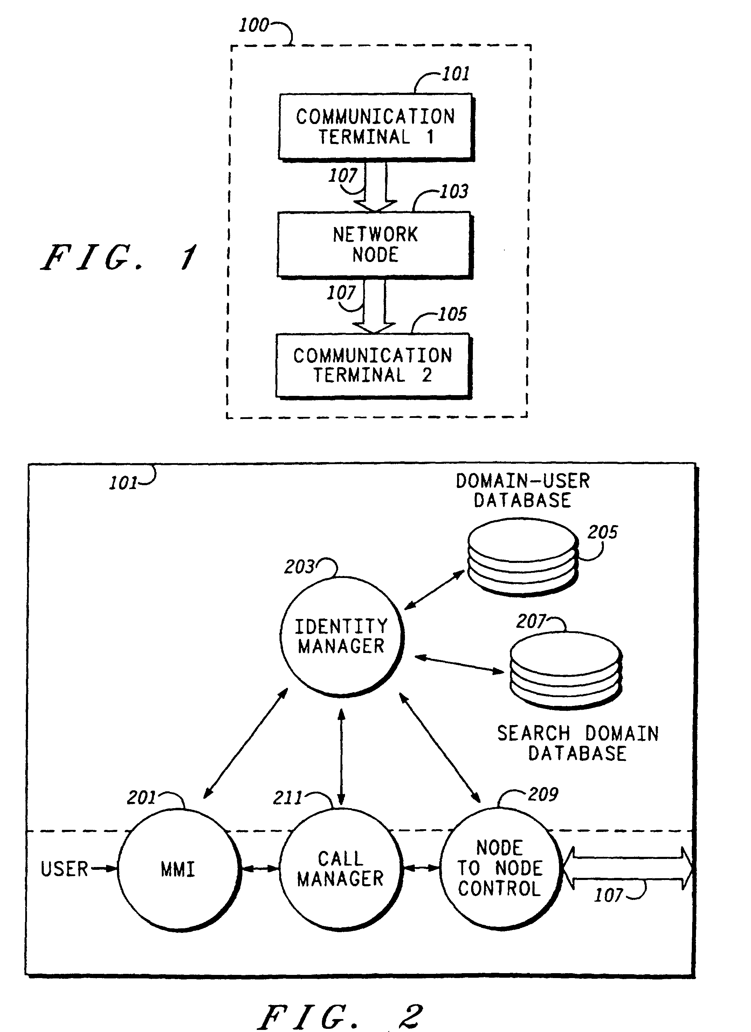

FIG. 1 is an illustration in block diagram form of a communications addressing network 100. The network 100 includes a first communication terminal 101, a network node 103 and a second communications terminal 105. The communication terminals 101, 105 and the network node 103 are interconnected via a communication link 107. This communication addressing network 100 is a simplified illustration of a system that may use the present invention. Other equally sufficient embodiments are included in the scope of the present invention. Other such embodiments include: multiple communication units in excess of two; multiple network nodes; and multiple communication links containing multiple communication terminals and multiple network nodes.

FIG. 2 is a detailed block diagram illustrating a communication terminal such as communication terminal 101. It is understood that the communications terminal can be realized in any one of a multiplicity of devices. Such devices include a telephone, a computer terminal, a personal digital assistant (PDA) or any other communication device that incorporates the below described functions. Alternatively, it is understood that the communication terminal in such a system could have limited functionality, thus, the network nodes would provide all of the addressing capabilities. This would allow the communications addressing network described herein to be accessed by the communication terminals that are available today. In the preferred embodiment, the communication terminal 101 includes a man-machine interface (MMI) 201, an identity manager 203, a domain-user database 205, a search domain database 207, a node to node controller 209 and a call manager 211.

The MMI 201 provides the user with an interface to set up communications and make inquiries about other users. The MMI 201 also provides an interface for the user to modify any of the records stored in the Domain-User database and the Search Domain Database.
The MMI 201 detects the input of a called user identity and creates a communication request. The communication request is generated by converting the input user identity into the required format via voice to text processing, input text processing or some other means as appropriate for the interface and presents this correctly formatted information to the Identity Manager 203 so that the information can be used to identify an appropriate Service Access Point Identification (SAP ID). If a user enters a SAP ID or other routing information directly in association with a communication request (as is normally the case today), the MMI 201 instructs the call manager 211 to set up a communication to the SAP ID or to follow the appropriate routing instructions. Otherwise, the MMI 201 creates a communication request having several fields representing real world information for identifying an end user. These fields might for example include the called user's name (e.g. Bill Robinson), the called users organisation (e.g. Motorola), the called user's address or partial address (e.g. Basingstoke, UK). Alternatively, the called user's identity can be in the form of a key word which is used in association with information about the calling user to identify the called user (e.g. keyword = "wife", Calling user = "Bill Robinson, 15 Wentworth Close"). The identity manager 203 identifies the SAP ID for the end user in response to the communication request from the MMI 201. The identity manager 203 has several resources for identifying the appropriate SAP ID.

The first resource is the domain user database 205 which is a local database created by the communication terminal 101. The domain user database stores individual records for particular users. The identity manager searches this domain-user database and attempts to match the records of the communication request with those contained in the domain user database. This database contains records for each user known to the first communication terminal 101 and for each communication service for which the user has access. In the preferred embodiment, the contents of the information stored in each record is as follows:
Unique Access Keyword/Calling ID
User Name
Organisation
Access Control Rule
Address
Prioritised Dialable Number(s)
Present Domain ID
Service
Charging Information
Prioritised list of Gateway Domains
SAP ID
Routing Path
Essentially, the Domain-User Database allows a variable set of fields to be used as keys to match against a complete record stored in the database. When a match is found, the complete matching record(s) is(are) returned. The purpose of the Domain-User Database is to provide the communication terminal with the information it needs to match the called user's identity and retrieve a SAP ID or alternative identity (e.g. routing path) to allow the system to route a communication to the required destination. In addition, the database contains information which will allow a matching of the desired communication service to a communication service provided by the called user's communication terminal. The database contains a number of additional items of information which are used to support specific telecommunications capabilities, such as mobility and calling user restriction. A description of the use of each of these fields can be found in later paragraphs.

If an appropriate SAP ID is located, the identity manager 203 utilises the call manager 211 to initiate a communication from the first communication terminal 101 to the second communication terminal 105. Additionally, the call manager 211 performs all the normal call related processing (routing, call state management, billing functions, etc.) as would be found in any existing communications system.

If no SAP ID is found in the domain-user database 205, then a search is performed in the search domain database 207, also local to the first communication terminal 101. The search domain database 207 contains records for alternative communication domains where it may be possible to locate a SAP ID for the desired end user. Essentially, the Search Domain Database 207 allows a variable number of fields to be used as keys to match against a complete record stored in the database. When a match is found, the complete matching record(s) is(are) returned. This database 207 contains a record for each alternative communications domain where it may be possible to locate a record for the called users and the specific service. For example, the database 207 may contain a SAP ID or routing information to the US on-line directory inquiries service, or Motorola's on-line directory service, etc.. In the preferred embodiment, the contents of the information stored in each record is as follows:
Unique Access Keyword
Access code for alternative Domain Databases (e.g. SAP ID of alternative node)
Service
Charging Information

Once a search database is identified by the search domain database 207, the identity manager 203 utilises the node to node controller 209 for communicating to remote network nodes on the communication link 107. The remote network nodes provide similar searching in remote network's domain user databases and search domain databases for these remote networks. The remote network nodes provide one of three services: one, they will communicate the appropriate SAP ID back to the first communication terminal 101; two, they will set up a communication between the first communication terminal 101 and the second communication terminal 103 identified by the desired SAP ID; or three, if an appropriate SAP ID is not identified then they will communicate a communication request to a second remote network node (not shown in FIG. 2). This second remote network node will provide the same functionality as the first remote network node.

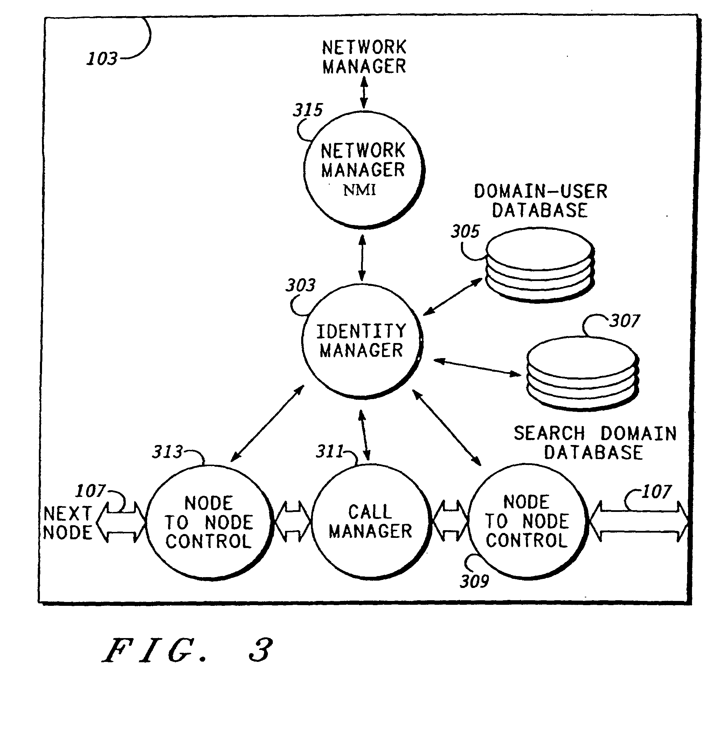

FIG. 3 is a detailed illustration of the network node 103 of FIG. 1. The network node 103 includes an identity manager 303, a domain user database 305, a search domain database 307, two network node controllers 309, 313, a call manager 311 and a network manager interface (NMI) 315. The network node 103 works in much the same way as the communication terminal, with the following differences. First, the network node 103 receives communication requests from communication terminals via the communication link 107. Second, the network node 103 includes the NMI 315. The NMI provides a network manager with an interface through which he may modify any of the records stored in either the Domain-User Database or the Search Domain Database in a remote node. Through this interface, the network manager is able to, for example, change the SAP ID for a given user because he has moved to a new location, change the complete numbering plan for a given network, add or remove records for external sources which might provide information about how the called user may be reached.

To illustrate the capabilities of this invention, two call set up scenarios are described below.

### Scenario 1 : Set up a call to a called user who the caller regularly calls

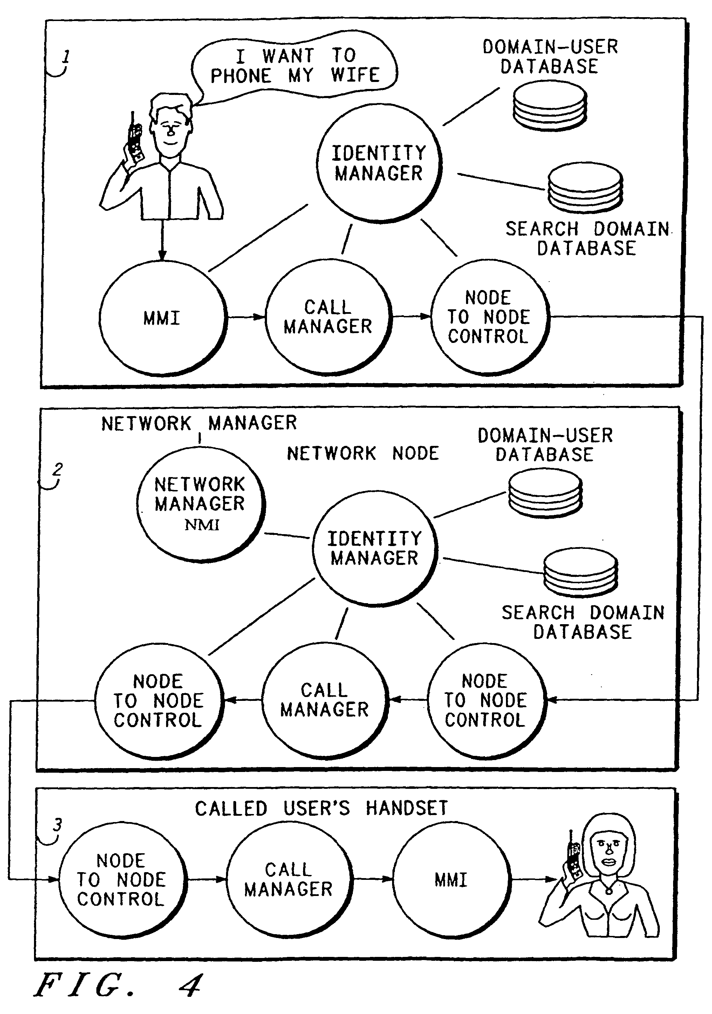

In this simple scenario, illustrated in FIG. 4, one user calls another user on the same system. The calling user has an communication terminal in accordance with this invention and because he regularly calls the called user he has configured the domain user database in his terminal to match a key word with the called user's SAP ID. The sequence of events for scenario 1 is as follows:
1.i The calling user speaks the words "I want to phone my wife" into his handset.
1.ii The MMI in the handset contains a speech recognition capability and generates the spoken phrase as a text string.
1.iii The MMI contains a text string parser, which scans the text string and re-formats the information into a message with at least the following fields:
   Service = Voice Telephony
   Called User Keyword = Wife
   This interpretation is presented to the user for confirmation and is confirmed (confirmation is optional).
1.iv The MMI passes this message to the Identity Manager in the handset and the Identity Manager in the handset receives this message
1.v The identity manager in the handset requests the Domain-User Database in the handset to find a record for the keyword "Wife" and the service "Voice Telephony". In the case where multiple users may sequentially use the calling handset, the calling user identity is used to distinguish which record in the Domain User Database is the matching record.
1.vi The Domain-User Database finds a matching record and returns the dialable number "012345 456789" to the Identity Manager in the handset.
1.vii The Identity Manager in the handset, having received sufficient information from the Domain-User Database decides that the call can proceed and passes the dialable number to the call manager in the handset, along with a request to set up the call.
1.viii The call manager in the handset receives the request from the Identity Manager in the handset and then proceeds to set up the call, in the normal way, by sending a call setup request to the node to node controller in the handset.
1.ix The node to node controller in the handset receives the setup request from the call manager in the handset and communicates the request to its peer node to node controller in the network node.
2 The network node sets up the call in the normal way by performing routing, switching and call control functions. This equipment routes the call to the correct system access point via a suitable node to node Control entity. On this occasion, since the calling user's handset has been able to provide the SAP ID for this call, the Identity Manager and its associated databases in the network node are not invoked.
3. The called user's terminal/handset in this scenario is just a normal telephone with no additional functionality. the called user's terminal receives the call as normal and delivers the call to the called user.

### Scenario 2 : Sending a file to a remote office for the first time

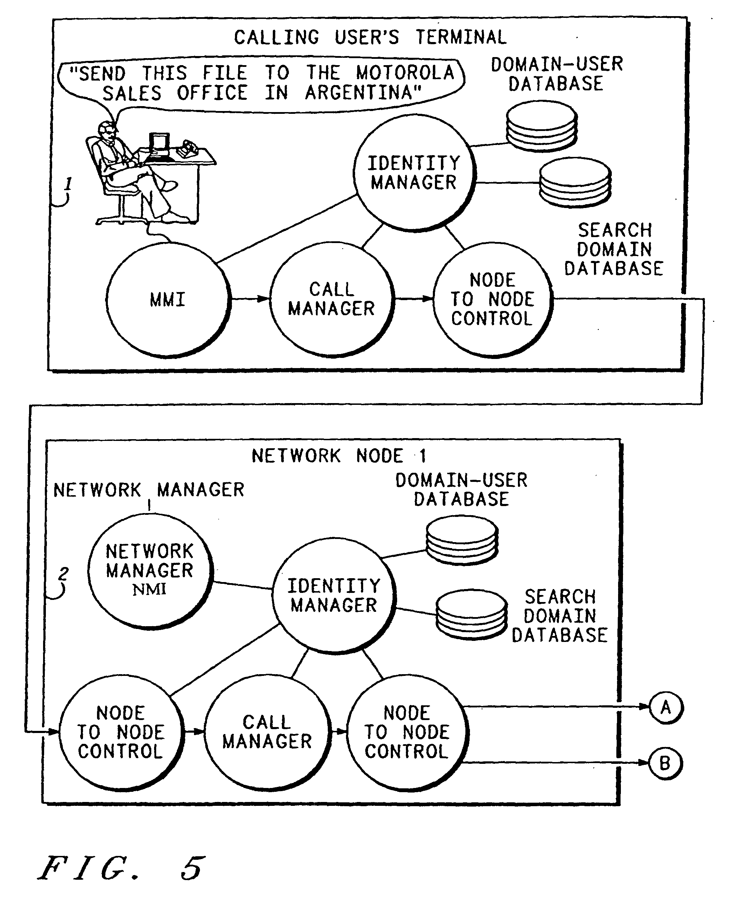

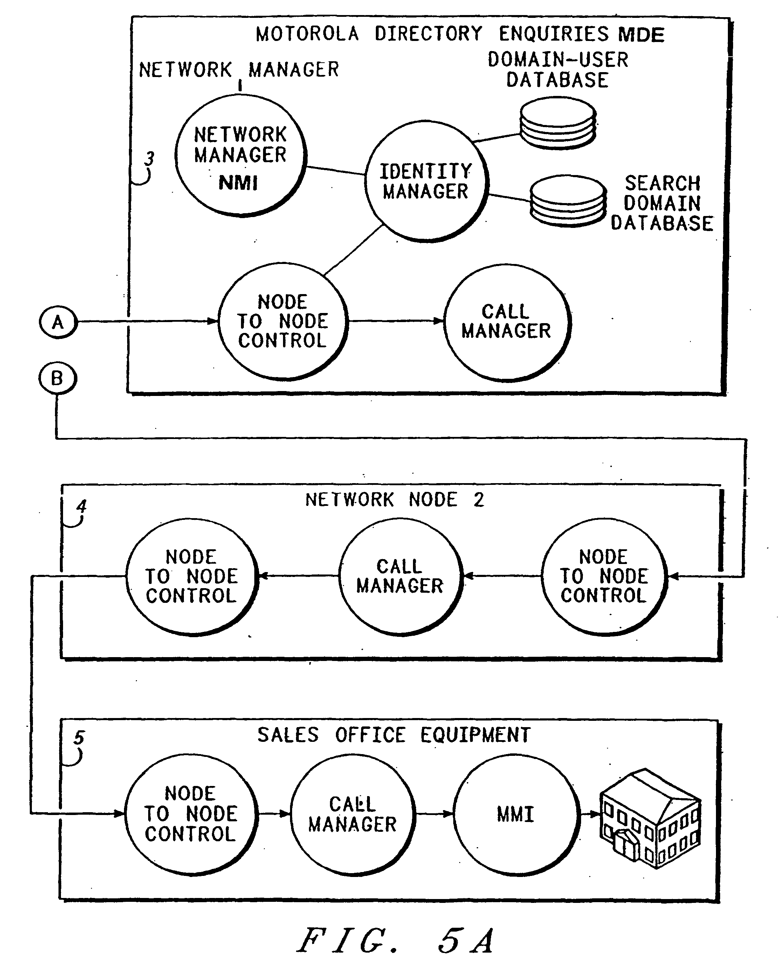

In this scenario, as illustrated in FIG. 5, the tremendous capability of the present invention is more dramatically explored. The basic scenario is that a user wishes to send a file to an office for the first time ever. This invention saves the user the trouble of having to manually look up the appropriate SAP ID or other routing information. In addition, once the correct SAP ID or other routing information has been determined by the functionality in accordance with this invention, the calling user's terminal is informed of this new information and is able to store the information for future use.

The sequence of events for scenario 2 is as follows:
1.i The calling user has a computer file which he wishes to send to a Motorola sales office in Argentina. His terminal's MMI has a voice input device, so he speaks the words "Send this file to the Motorola Sales Office in Argentina" into the voice input device. (If no voice input device exists, then the calling user can type in the appropriate information, perhaps via a formatted input screen.)
1.ii The MMI contains a speech recognition capability and generates the spoken phrase as a text string.
1.iii The MMI scans the text string and re-formats the information into a message with at least the following fields:
   Service = File Transfer
   Name = Motorola Sales Office
   Organisation = Null
   Country = Argentina
   This interpretation is presented to the user for confirmation however the user decides to correct the interpretation by saying (or typing) "Organisation is Motorola, Name is Sales Office". The MMI corrects the interpretation according to the new instructions from the calling user.
1.iv The MMI passes this formatted message to the Identity Manager in the terminal and the Identity Manager in the terminal receives this message
1.v The Identity Manager in the terminal requests the Domain-User Database in the terminal to find a record matching the fields Name = Sales Office, Organisation = Motorola, Service = File Transfer, Country = Argentina.
1.vi The Domain-User Database does not on this occasion find any suitable matching record and returns this fact to the Identity Manager in the terminal.
1.vii The Identity Manager, having failed to get a matching response from the Domain-User Database, now analyses the fields of information itself and requests the Search Domain Database in the terminal to find a matching record for Motorola or for Argentina.
[1.viii step omitted in error]
1.ix The Search Domain database does not find matching records for either of the requests and reports this fact to the Identity Manager in the terminal.
1.x The Identity Manager in the terminal having no further alternatives, forwards the original formatted inquiry (Name = Sales Office, Organisation = Motorola, Service = File Transfer, Country = Argentina) to the network node 1 via the node to node controller in the Terminal.
2.i The node to node controller in the network node 1 recognises the formatted addressing information and passes this information to the Identity Manager in network node 1, which receives this message.
2.ii The Identity Manager in network node I requests the network node's Domain-User Database to find a record matching the fields Name = Sales Office, Organisation = Motorola, Service = File Transfer, Country = Argentina.
2.iii The Domain-User Database in the network node 1 does not on this occasion find any suitable matching record and returns this fact to the Identity Manager in the network node 1.
2.iv The Identity Manager in the network node 1, having failed to get a matching response from the Domain-User Database in the network node 1, now analyses the fields of information itself and requests the Search Domain Database in network node 1 to find a matching record for Motorola or for Argentina.
2.v The Search Domain database finds matching records for both requests and returns records for the on-line Motorola Directory Inquiries server and the on-line Argentina Directory Inquiries Server respectively to the Identity Manager in network node 1.
2.vi The Identity Manager in network node 1 receives these two records from the Search Domain Database in network node 1 and prioritises the two alternatives based on an algorithm that includes the cost of searching in the remote systems. In the case of cost-based prioritisation, it turns out that the Motorola Directory Inquiries server offers a free service, whereas the Argentina server costs $2.00 per search, so the Identity Manager selects the Motorola server and extracts the address of this server from the returned record. (Alternatively the selection from these two alternative can be performed by the calling user himself. This would require the alternatives to be sent back up the chain and presented to the calling user.)
2.vii The Identity Manager in network node 1 forwards the original formatted search request (Name = Sales Office, Organisation = Motorola, Service = File Transfer, Country = Argentina) to the appropriate node to node Control entity which is able to communicate the request to the on-line Motorola Directory Inquiries server.
3.i The node to node controller in the Motorola Directory Inquiries server (MDE) recognises the formatted addressing information and passes it to the Identity Manager in the MDE server, which receives this message.
3.ii The Identity Manager in the MDE requests the Domain-User Database in the MDE to find a record matching the fields Name = Sales Office, Organisation = Motorola, Service = File Transfer, Country = Argentina.
3.iii The Domain-User Database finds a matching record and returns the matching record to the Identity Manager in the MDE.
3.iv The Identity Manager in the MDE is not able to set up the call to the Motorola Sales Office in Argentina, since it does not have a suitable node to node controller, so the matching record is returned to network node 1 via the appropriate node to node controller.
2.viii The node to node controller in network node 1 receives the record and passes it to the Identity Manager in network node 1.
2.ix The Identity Manager in network node 1 extracts the appropriate SAP ID and/or routing information from the record and instructs the call manager in network node 1 to set up the appropriate call. The Identity Manager in network node 1 also transmits the matching record back in the direction of the calling user's node via the appropriate node to node controller.
1.xi The matching record is received in the calling user's terminal via the node to node controller in that terminal. The node to node controller passes this record on to the Identity Manager in the terminal.
1.xiiThe Identity Manager in the terminal receives this record, and instructs the Domain-User Database in the terminal to store the new record.
1.xiii The Domain-User Database in the calling user's terminal stores the new record for future use.
   Note: the address of the Motorola Directory Inquiries service may also be returned to the calling user's terminal, where it would be stored in the Search Domain Database. Future requests by this user for communications to Motorola could then bypass the identity matching functions of the network node and directly ask the Motorola Directory Inquiries equipment.
2.x The call manager in network node 1 sets up the service connection via a second network node (4) in Argentina to the Sales Office Equipment in Argentina (5) and the service is executed.

Other foreseeable services provided in the preferred embodiment.

### Restricted Access (e.g. Ex-directory)

It would be essential that users identities such as "The Queen at Buckingham Palace" are not abused. The equivalent of going ex-directory must be supported in by this invention. This is achieved by having a field entitled "Access Control Rule" in each record of the Domain-User Database. In this field is stored a password, DTMF sequence, authentication and encryption rule or whatever means of security the called user employs to protect against unwanted callers. In the case of password protection, no record will be returned by the Domain-User Database without the correct password being supplied. In this way the called user can prevent malicious calls by only providing the password information to selected other users. Some agencies such as the police may not be required to provide the password for obvious reasons.

### Route Selection

It may be possible that one called user may have multiple subscriptions for the same or similar services. For example a user may have a fixed telephone line subscribed through one network operator and a mobile phone subscribed through another network operator, both of which are capable of delivering the voice telephony service. The choice of which network to select (i.e. which SAP ID) as the matching SAP ID for the called user id made by the Identity Manager, based upon some algorithm such as minimum cost, maximum likelihood of success, voice quality, etc. The various alternatives are stored in priority order in the "Prioritised dialable Number(s)" field of each record in the Domain-Users Database.

Furthermore, there may be multiple routes available for setting up the call to a specific SAP ID - this manifests itself amongst other things in the determination of which node to node controller is selected during call setup. The various routes are prioritised according to some algorithm such as minimum cost, maximum quality, etc. This priority can change according to time of day or some other algorithm and this information is stored in the field named "Prioritised List of Gateway Domains".

### Intelligent Re-Routing for Roaming Called Users

Although the called user may be known to the calling user by a particular user identity, such as "Bill Robinson at Motorola, UK", the information stored in the Domain-User Database can be used to re-route calls to the called user in circumstances where the called user has roamed to an alternative location, (e.g. traveled to another network in another country). The Identity Manager in one of a suitable nodes intercepts the call setup process and re-routes the call setup to the new destination, the location of which is provided by a record in the Domain-User Database.

### Access to User's Home Databases from Another Terminal

The user's own Domain-User Database and Search Domain Database may be stored in a removable User Identity Module, such as a SIM card or equivalent. If this is the case, when the user roams to a remote location and uses different terminal, he simply inserts his SIM into the terminal in the normal way and all his own database information is available to him.

Where it is the case that the Domain-User Database and Search Domain Database are stored in the user's terminal, and not in a removable SIM, the method of accessing the user's own databases from a remote location must clearly be different. In this case, the user knows that his own database contains certain records that may not be present in the remote terminal he is using. In order to reduce the cost and time penalty incurred by searching for routing information pertaining to a specific called user through successive databases in various network nodes, the user can instruct the search to be performed first in own database. In order to do this, the user provides the SAP ID of his own terminal along with the instruction to search the database at that location for the record of the desired called party. This form of remote access to a user's own databases may be protected by access rules such as password protection, in order to prevent unauthorised access to a users databases.

### Intelligent Re-Routing upon Numbering Plan Change

In the case where the numbering plan has been changed by the network operator, and a user's terminal databases have not been updated in line with this change, the user's terminal will translate the called user identity information into an incorrect (out of date) SAP ID or other routing information at call set up time. In these circumstances, the nodes in the network may provide sufficient intelligence that one of the nodes intercepts the out of date SAP ID or other routing information and knowing that it is out of date and unavailable, either
a) accesses its Domain-User Database to translate the out of date information into the correct and current information. Having performed this translation, the call setup process can continue and the revised record for the called user is returned to the calling user's terminal where the old record for the called user is updated to match the current numbering plan situation. The updating of the record in the user' Domain-User Database may be subject to user confirmation. or
b) send a message to the calling user informing the user that the SAP ID or other routing information is incorrect. Upon receipt of this message in the user's terminal, the terminal may either
   b.i) intercept this message and respond to the node in the network with the called user identity to which the call is being attempted.
   b.ii) pass the message to the user who then supplies the user identity of the called user. In this scenario, the Domain-User Database in the terminal would not use the called user identity to supply the same out of date matching record, and the identity of the called user is supplied into the network for resolution.

Whichever of b.i ) or b.ii) is implemented, this would be followed by the procedure to determine the correct SAP ID or other routing information based on the user identity and update database records in accordance with the methods already described in this disclosure.

## Claims

1. A communication terminal (101) for use by a first user for communicating to a second user, the communication terminal comprising:
a man-machine interface MMI (201) for interfacing to the first user and generating a communication request;
an identity manager (203) for identifying a service access point (SAP) identification (ID) of the second user in response to the communication request from the man-machine interface MMI (201); and
a call manager (211) for calling the second user via the service access point identification (SAP ID) provided by the identity manager (203);
**characterized in that**:
said man-machine interface MMI (201) is adapted to generate said communication request including a name of the second user and a type of service used for communication, wherein said name and said type of service are identified by said first user;
and
the communication terminal (101) further comprises:
a domain-user database (205) for use by the identity manager (203) for searching for the service access point identification (SAP ID) using the communication request;
a search domain database (207) for use by the identity manager (203) for searching for alternate search domains for searching for the service access point identification (SAP ID) using the communication request; and
a node-to-node controller (209) for contacting alternate search domains on a communication network for searching for the service access point identification (SAP ID) using the communication request.

2. A communication terminal in accordance with claim 1 wherein the communication request further comprises a message having at least one field chosen from a group consisting of Service Type, Organization, Country, and Name.

3. A communication terminal in accordance with claim 2 wherein the Service Type includes a predetermined service type chosen from a group consisting of voice service, data service, video service, and file transfer service.

4. A communication terminal in accordance with claim 1 wherein the domain-user database (205) has a plurality of service access point identification (SAP ID) records, wherein each service access point identification (SAP ID) record at least one field chosen from a group consisting of service access point identification (SAP ID). User Name. Organisation, Access Control Rule, Address, Prioritised Dialable Numbers Present Domain identification, Service, Charging Information, and Prioritised List of Gateway Domains.

5. A communication terminal in accordance with claim 1 wherein the man-machine interface MMI (201) further comprises means for transforming a user input into a communication request, said means for transforming including transforming the user input to a text media and formatting the text media into a predetermined communication request format.

6. A method of routing a communication from a first user to a second user, the method including the steps:
(a) in a communication terminal,
(i) receiving an input from the first user, said input including a second user's name and a type of service desired for said communication,
(ii) identifying a routing path for the communication by matching the input with one of a plurality of local stored records,
(iii) transmitting a request to a network node for identifying a routing path for the communication, the request comprises said input and the routing path is found by matching the input with remote stored records when a routing path cannot be identified from the local stored records,
(b) identifying a routing path for the communication by matching the input with one of a plurality of remote stored records when a routing path cannot be identified from the local stored records, and
(c) initiating communication via the identified routing path.

7. A method in accordance with Claim 6 and including the further steps of;
transmitting the routing path identified from the remote stored records to the communication terminal, and adding said identified routing path to the local stored records for future use.

## Patentansprüche

1. Kommunikationsendgerät (101) zur Verwendung durch einen ersten Anwender zum Kommunizieren mit einem zweiten Anwender, wobei das Kommunikationsendgerät umfasst:
eine Mensch-Maschinen-Schnittstelle MMI (201) als Schnittstelle zu dem ersten Anwender und zum Erzeugen einer Kommunikationsaufforderung;
einen Identitätsmanager (203) zum Identifizieren einer Dienstzugangspunkt(SAP)-Identifizierung (ID) des zweiten Anwenders in Reaktion auf die Kommunikationsaufforderung von der Mensch-Maschinen-Schnittstelle MMI (201); und
einen Rufmanager (211) zum Anrufen des zweiten Anwenders über die durch den Identitätsmanager (203) zur Verfügung gestellte Zugangspunktidentifizierung (SAP ID);
**dadurch gekennzeichnet, dass**
die Mensch-Maschinen-Schnittstelle MMI (201) geeignet ist, um die Kommunikationsaufforderung zu erzeugen, die einen Namen des zweiten Anwenders und eine für eine Kommunikation verwendete Dienstart umfasst, wobei der Name und die Dienstart durch den ersten Anwender identifiziert werden; und
das Kommunikationsendgerät (101) weiter umfasst:
eine Anwenderbereichsdatenbank (205) zur Verwendung durch den Identitätsmanager (203) zum Suchen nach der Dienstzugangspunktidentifizierung (SAP ID) unter Verwendung der Kommunikationsaufforderung;
eine Suchbereichsdatenbank (207) zur Verwendung durch den Identitätsmanager (203) zum Suchen nach alternativen Suchbereichen zum Suchen nach der Dienstzugangspunktidentifizierung (SAP ID) unter Verwendung der Kommunikationsaufforderung; und
eine Knoten-zu-Knoten-Steuerung (209) zum Kontaktieren alternativer Suchbereiche auf einem Kommunikationsnetz zum Suchen nach der Dienstzugangspunktidentifizierung (SAP ID) durch Verwenden der Kommunikationsaufforderung.

2. Kommunikationsendgerät gemäß Anspruch 1, wobei die Kommunikationsaufforderung weiter eine Nachricht umfasst, die mindestens ein Feld hat, das aus einer Gruppe ausgewählt wurde, die aus Dienstart, Organisation, Land und Name besteht.

3. Kommunikationsendgerät gemäß Anspruch 2, wobei die Dienstart eine vorbestimmte Dienstart umfasst, die aus einer Gruppe ausgewählt wurde, die aus Sprachdienst, Datendienst, Videodienst und Dateiübertragungsdienst besteht.

4. Kommunikationsendgerät gemäß Anspruch 1, wobei die Anwenderbereichsdatenbank (205) über eine Mehrzahl von Dienstzugangspunktidentifizierungs(SAP ID)-Datensätzen verfügt, wobei jeder Dienstzugangspunktidentifizierungs (SAP ID)-Datensatz mindestens ein Feld hat, das aus einer Gruppe ausgewählt wurde, die aus Dienstzugangspunktidentifizierung(SAP ID), Anwendername, Organisation, Zugangssteuerungsregel, Adresse, priorisierte wählbare Nummern, Identifizierung vorhandener Bereiche, Dienst, Gebühreninformation und priorisierte Liste von Gateway-Bereichen besteht.

5. Kommunikationsendgerät gemäß Anspruch 1, wobei die Mensch-Maschinen-Schnittstelle MMI (201) weiter Mittel zum Transformieren einer Anwendereingabe in eine Kommunikationsaufforderung umfasst, wobei die Mittel zum Transformieren ein Transformieren der Anwendereingabe in ein Textmedium und ein Formatieren des Textmediums in ein vorbestimmtes Kommunikationsaufforderungsformat umfassen.

6. Verfahren zum Leiten einer Kommunikation von einem ersten Anwender zu einem zweiten Anwender, wobei das Verfahren die folgenden Schritte umfasst:
(a) in einem Kommunikationsendgerät,
(i) Empfangen einer Eingabe von einem ersten Anwender, wobei die Eingabe den Namen eines zweiten Anwenders und eine für die Kommunikation gewünschte Dienstart umfasst,
(ii) Identifizieren eines Leitpfades für die Kommunikation durch Abgleichen der Eingabe mit einem aus einer Mehrzahl von lokal gespeicherten Datensätzen
(iii) Übertragen einer Aufforderung an einen Netzwerkknoten zum Identifizieren eines Leitpfades für die Kommunikation, wobei die Aufforderung die Eingabe umfasst und der Leitpfad dadurch gefunden wird, dass die Eingabe mit entfernt gespeicherten Datensätzen abgeglichen wird, wenn kein Leitpfad von den lokal gespeicherten Datensätzen identifiziert werden kann,
(b) Identifizieren eines Leitpfades für die Kommunikation durch Abgleichen der Eingabe mit einem aus einer Mehrzahl von entfernt gespeicherten Datensätzen, wenn von den lokal gespeicherten Datensätzen kein Leitpfad identifiziert werden kann, und
(c) Initiieren einer Kommunikation über den identifizierten Leitpfad.

7. Verfahren gemäß Anspruch 6, das die weiteren Schritte umfasst:
Übertragen des von den entfernt gespeicherten Datensätzen identifizierten Leitpfades an das Kommunikationsendgerät und Hinzufügen des identifizierten Leitpfades zu den lokal gespeicherten Datensätzen für eine zukünftige Verwendung.

## Revendications

1. Terminal de communication (101) pour une utilisation par un premier utilisateur pour communiquer sur un second utilisateur, le terminal de communication comprenant :
une interface homme-machine MMI (201) pour réaliser un interfaçage sur le premier utilisateur et pour générer une requête de communication ;
un gestionnaire d'identité (203) pour identifier une identification (ID) de point d'accès de service (SAP) du second utilisateur en réponse à la requête de communication en provenance de l'interface homme-machine MMI (201) ; et
un gestionnaire d'appel (211) pour appeler le second utilisateur via l'identification de point d'accès de service (SAP ID) qui est fournie par le gestionnaire d'identité (203),
**caractérisé en ce que** :
ladite interface homme-machine MMI (201) est adaptée pour générer ladite requête de communication incluant un nom du second utilisateur et un type de service utilisé pour une communication, où ledit nom et ledit type de service sont identifiés par ledit premier utilisateur ; et
le terminal de communication (101) comprend en outre :
une base de données d'utilisateurs de domaine (205) pour une utilisation par le gestionnaire d'identité (203) pour rechercher l'identification de point d'accès de service (SAP ID) en utilisant la requête de communication ;
une base de données de domaines de recherche (207) pour une utilisation par le gestionnaire d'identité (203) pour rechercher d'autres domaines de recherche pour rechercher l'identification de point d'accès de service (SAP ID) en utilisant la requête de communication ; et
un contrôleur noeud à noeud (209) pour contacter d'autres domaines de recherche sur un réseau de communication pour rechercher l'identification de point d'accès de service (SAP ID) en utilisant la requête de communication.

2. Terminal de communication selon la revendication 1, dans lequel la requête de communication comprend en outre un message qui comporte au moins une zone choisie parmi groupe qui est constitué par un type de service, une organisation, un pays et un nom.

3. Terminal de communication selon la revendication 2, dans lequel le type de service inclut un type de service prédéterminé choisi parmi un groupe constitué par un service vocal, un service de données, un service vidéo et un service de transfert de fichier.

4. Terminal de communication selon la revendication 1, dans lequel la base de données de d'utilisateurs de domaine (205) comporte une pluralité d'enregistrements d'identification de point d'accès de service (SAP ID), où chaque enregistrement d'identification de point d'accès de service (SAP ID) comporte au moins une zone choisie parmi un groupe qui est constitué par une identification de point d'accès de service (SAP ID), un nom d'utilisateur, une organisation, une règle de commande d'accès, une adresse, des numéros de composition avec priorité, une identification de domaine courant, un service, une information d'imputation en facturation et une liste avec priorité de domaines de passerelle.

5. Terminal de communication selon la revendication 1, dans lequel l'interface homme-machine MMI (201) comprend en outre un moyen pour transformer une entrée d'utilisateur selon une requête de communication, ledit moyen de transformation incluant la transformation de l'entrée d'utilisateur selon un support d'information sous forme de texte et le formatage du support d'information sous forme de texte selon un format de requête de communication prédéterminé.

6. Procédé d'aiguillage d'une communication depuis un premier utilisateur sur un second utilisateur, le procédé incluant les étapes de :
(a) dans un terminal de communication,
(i) réception d'une entrée en provenance du premier utilisateur, ladite entrée incluant un nom de second utilisateur et un type de service souhaité pour ladite communication ;
(ii) identification d'une voie d'aiguillage pour la communication en faisant se correspondre l'entrée avec l'un d'une pluralité d'enregistrements stockés locaux ; et
(iii) transmission d'une requête à un noeud de réseau pour identifier une voie d'aiguillage pour la communication, la requête comprenant ladite entrée et la voie d'aiguillage est trouvée en faisant se correspondre l'entrée avec des enregistrements stockés à distance lorsqu'une voie d'aiguillage ne peut pas être identifiée à partir des enregistrements stockés locaux ;
(b) identification d'une voie d'aiguillage pour la communication en faisant se correspondre l'entrée avec l'un d'une pluralité d'enregistrements stockés à distance lorsqu'une voie d'aiguillage ne peut pas être identifiée à partir des enregistrements stockés locaux ; et
(c) initiation d'une communication via la voie d'aiguillage identifiée.

7. Procédé suivant la revendication 6, incluant les étapes supplémentaires de :
transmission de la voie d'aiguillage identifiée à partir des enregistrements stockés à distance sur le terminal de communication et addition de ladite voie d'aiguillage identifiée aux enregistrements stockés locaux pour une utilisation future.
